# EUROPEAN PATENT APPLICATION

(11) **EP 4 156 045 A1**
(43) Date of publication of application: **29.03.2023**
(21) Application number: 22196747.4
(22) Date of filing: 21.09.2022
(51) Int. Cl.: G06Q 10/02, G06Q 50/30

(54) **MULTIMODAL TRANSPORTATION SYSTEM, MULTIMODAL TRANSPORTATION METHOD, AND PROGRAM**

(30) Priority: 27.09.2021 JP 2021156842
(71) Applicant: Honda Motor Co., Ltd., Minato-ku Tokyo 107-8556 (JP)
(72) Inventor: TAKEZAWA, Tomoharu, Tokyo, 107-8556 (JP)
(74) Representative: Weickmann & Weickmann PartmbB

(57) **Abstract**

A multimodal transportation system (10) includes a creation unit (110) that creates an itinerary (310) including a movement route and a plurality of types of moving bodies moving along the movement route, and a proposal unit (130) that outputs the itinerary to an external terminal (40). Based on the movement situation of the user and traffic information related to the movement by a first moving body (MA), the creation unit changes a part of the itinerary that is related to the movement by a second moving body (MB) scheduled to be used by the user before the first moving body, and the proposal unit outputs the itinerary that has been modified to the external terminal.

## Description

### BACKGROUND OF THE INVENTION

### FIELD OF THE INVENTION

The present invention relates to a multimodal transportation system, a multimodal transportation method, and a program.

### DESCRIPTION OF THE RELATED ART

US 2021/0241234 A1 discloses a system for transporting a user using a combination of land transportation means and air transportation means, wherein during transportation of the user, the state of progress of transportation by the current transportation means is used for the state of transportation by the subsequent transportation means to adjust the subsequent transportation.

### SUMMARY OF THE INVENTION

In the multimodal transportation system disclosed in US 2021/0241234 A1, there is a problem that, even when it is predicted that the movement of the user by the subsequent transportation will not proceed according to the itinerary, it is difficult to avoid the situation.

An object of the present invention is to solve the aforementioned problem.

According to a first aspect of the present invention, provided is a multimodal transportation system that provides a user with a service for moving from a departure place to a destination using a plurality of types of moving bodies, the multimodal transportation system including: a creation unit configured to create, based on the departure place and the destination, an itinerary including a movement route from the departure place to the destination, and the plurality of types of moving bodies configured to move along the movement route; a determination unit configured to determine whether the plurality of types of moving bodies based on the itinerary are available; a proposal unit configured to output, to an external terminal, the itinerary including the plurality of types of moving bodies determined to be available, in order to propose the itinerary to the user; and a monitoring unit configured to monitor a movement situation of the user who moves based on the itinerary, and acquire traffic information related to movement of the user by the plurality of types of moving bodies, wherein based on the movement situation of the user that is based on the itinerary designated by the user and the traffic information that is related to the movement of the user by a first moving body among the plurality of types of moving bodies, the creation unit changes a part of the itinerary that is related to the movement of the user by a second moving body among the plurality of types of moving bodies, the second moving body being scheduled to be used by the user before the first moving body, and in order to propose a change of the part of the itinerary to the user, the proposal unit outputs the itinerary that has been modified to include the change to the external terminal.

According to a second aspect of the present invention, provided is a multimodal transportation method for providing a user with a service for moving from a departure place to a destination using a plurality of types of moving bodies, the multimodal transportation method including the steps of: creating, based on the departure place and the destination, an itinerary including a movement route from the departure place to the destination, and the plurality of types of moving bodies configured to move along the movement route; determining whether the plurality of types of moving bodies based on the itinerary are available; outputting, to an external terminal, the itinerary including the plurality of types of moving bodies determined to be available, in order to propose the itinerary to the user; monitoring a movement situation of the user who moves based on the itinerary and acquiring traffic information that is related to movement of the user by the plurality of types of moving bodies; based on the movement situation of the user that is based on the itinerary designated by the user and the traffic information that is related to the movement of the user by a first moving body among the plurality of types of moving bodies, changing a part of the itinerary that is related to the movement of the user by a second moving body among the plurality of types of moving bodies, the second moving body being scheduled to be used by the user before the first moving body; and in order to propose a change of the part of the itinerary to the user, outputting the itinerary that has been modified to include the change to the external terminal.

According to a third aspect of the present invention, provided is a program for causing a processor to execute the multimodal transportation method according to the second aspect.

According to the present invention, the possibility of avoiding a situation in which the movement of the user by the transportation subsequent to the started transportation does not proceed according to the itinerary is increased.

The above and other objects features and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 is a diagram showing a configuration of a multimodal transportation system according to an embodiment of the present invention;
FIG. 2 is a diagram showing a configuration of an itinerary server;
FIG. 3A is a diagram showing a screen display example of a user terminal;
FIG. 3B is a diagram showing a screen display example of the user terminal;
FIG. 3C is a diagram showing a screen display example of the user terminal;
FIG. 4 is a diagram showing a sequence of creating an itinerary and reserving (use of) a moving body;
FIG. 5 is a diagram showing a sequence of a change of a part of the itinerary and a change of reservation of the moving body;
FIG. 6 is a diagram illustrating an itinerary that has been created and confirmed;
FIG. 7 is a diagram illustrating a modified itinerary;
FIG. 8 is a flowchart showing a process of creating an itinerary and a process of reserving the moving body performed by the itinerary server;
FIG. 9 is a flowchart showing a process of changing a part of the itinerary and a process of changing the reservation of the moving body performed by the itinerary server;
FIG. 10 is a diagram illustrating an itinerary modified in a multimodal transportation system according to a first modification; and
FIG. 11 is a diagram illustrating an example in which a sensor for identifying a seating position of a user is mounted on a moving body in a multimodal transportation system according to a second modification.

### DESCRIPTION OF THE INVENTION

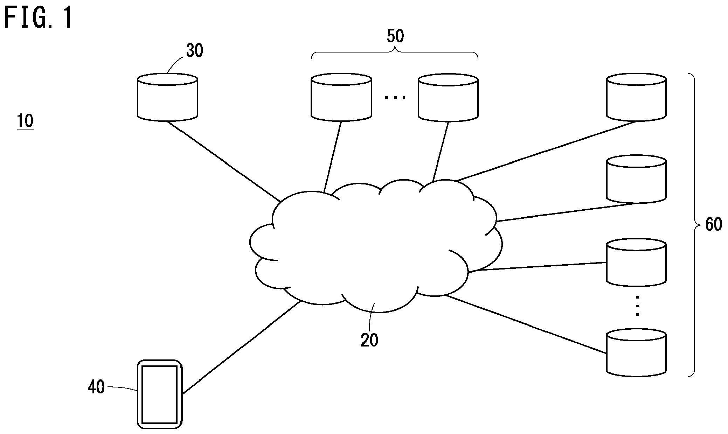

FIG. 1 is a diagram showing a configuration of a multimodal transportation system 10 according to an embodiment of the present invention. The multimodal transportation system 10 provides a user with a service for moving from a departure place to a destination using a plurality of types of moving bodies. The multimodal transportation system 10 of the present embodiment includes an itinerary server 30, a user terminal 40, a plurality of information providing servers 50, and a plurality of moving body management servers 60. These devices are connected to each other via a communication network 20. Various moving bodies such as an automobile, an airplane, a train, a bus, and a ship are applied as the moving bodies used in the present embodiment.

Each information providing server 50 provides traffic information related to the movement of the above-described moving body, or position information of the user terminal 40. Each moving body management server 60 is a server for a provider of a moving body participating in the utilization service of a plurality of types of moving bodies to manage the moving body owned by the provider. Each moving body management server 60 determines whether the moving body owned by the provider is available, processes reservation (for use) of the moving body, and provides information about the current location of the moving body if the moving body is moving.

Upon receiving an itinerary creation request from the user via the user terminal 40, the itinerary server 30 inquires of the moving body management server 60 about availability of the moving body, and creates an itinerary based on an inquiry result. The itinerary server 30 proposes an itinerary using a plurality of types of moving bodies to the user via the user terminal 40. When the itinerary is designated by the user and an application for reservation of a moving body included in the itinerary is requested, the itinerary server 30 applies for the reservation to the moving body management server 60. When the reservation of the moving body is confirmed, the itinerary server 30 confirms the itinerary and notifies the user of the confirmed itinerary via the user terminal 40.

The itinerary server 30 proposes to the user via the user terminal 40 to change a part of the itinerary based on the traffic information acquired from the information providing server 50 while the user is moving along the confirmed itinerary. When a part of the itinerary is changed, the itinerary server 30 applies to the moving body management server 60 for a change of the reservation of the moving body.

The user terminal 40 is used to input and transmit itinerary creation conditions when the user requests the itinerary server 30 to create an itinerary. The user terminal 40 not only displays the itinerary proposed by the itinerary server 30 and a reservation inquiry about the reservation of the moving body, but also displays a change proposal and a change inquiry about the itinerary and the reservation.

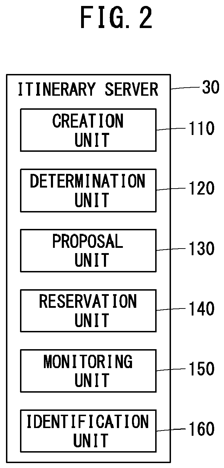

FIG. 2 is a diagram showing a configuration of the itinerary server 30. The itinerary server 30 includes processing circuitry, and a memory storing a program and the like. The memory storing the program is, for example, a non-transitory computer readable storage medium. The program includes a plurality of instructions that cause the processing circuitry to execute a multimodal transportation method. The itinerary server 30 according to the present embodiment functions as a result of the processing circuitry of the itinerary server 30 executing the program. The itinerary server 30 creates an itinerary including a movement route from a departure place to a destination of the user and a plurality of types of moving bodies moving along the movement route, and outputs the itinerary to the user terminal 40 in order to propose the itinerary to the user. The processing circuitry includes a processor such as a CPU. By the processing circuitry of the itinerary server 30 executing the program, the itinerary server 30 functions as a creation unit 110, a determination unit 120, a proposal unit 130, a reservation unit 140, a monitoring unit 150, and an identification unit 160. At least part of these units may be realized by an ASIC, an FPGA, or other integrated circuits. The memory of the itinerary server 30 includes a volatile memory such as a RAM, and a nonvolatile memory such as a ROM and a flash memory.

Based on the departure place and the destination of the user, the creation unit 110 creates an itinerary including a movement route from the departure place to the destination and a plurality of types of moving bodies moving along the movement route. Based on the movement situation of the user who is moving based on the itinerary designated by the user and the traffic information related to movement by a first moving body, the creation unit 110 changes a part of the itinerary that is related to movement by a second moving body. Both the first moving body and the second moving body are moving bodies scheduled to be used later by the user based on the itinerary. The user is scheduled to use the second moving body before the first moving body.

The determination unit 120 determines whether a plurality of types of moving bodies based on the itinerary are available, based on a result of an inquiry to the moving body management server 60. When a part of the itinerary is changed, the determination unit 120 determines whether the reservation of the moving body can be changed, based on a result of an inquiry to the moving body management server 60.

In order to propose, to the user, the itinerary for which the moving bodies are determined to be available, the proposal unit 130 outputs the itinerary to the user terminal 40. The proposal unit 130 outputs, to the user terminal 40, the itinerary and a reservation inquiry for proposing reservation of the plurality of types of moving bodies included in the itinerary. In order to propose a change of a part of the itinerary to the user, the proposal unit 130 outputs the modified itinerary to the user terminal 40. When a part of the itinerary is changed, the proposal unit 130 outputs, to the user terminal 40, the modified itinerary and a reservation change inquiry for proposing a change of the reservation of the moving body.

Upon receiving a request to apply for reservation of the moving body or a request to apply for a change of the reservation of the moving body from the user terminal 40, the reservation unit 140 applies for reservation of the moving body or a change of the reservation to the moving body management server 60.

The monitoring unit 150 monitors a movement situation of the user who moves based on the itinerary. The movement situation of the user is obtained based on the information about the current location of the moving body provided from the moving body management server 60 and the position information about the user terminal 40 provided from the information providing server 50.

The identification unit 160 acquires information for identifying a seating position, in the moving body, of the user who moves based on the itinerary, from a sensor mounted on the moving body.

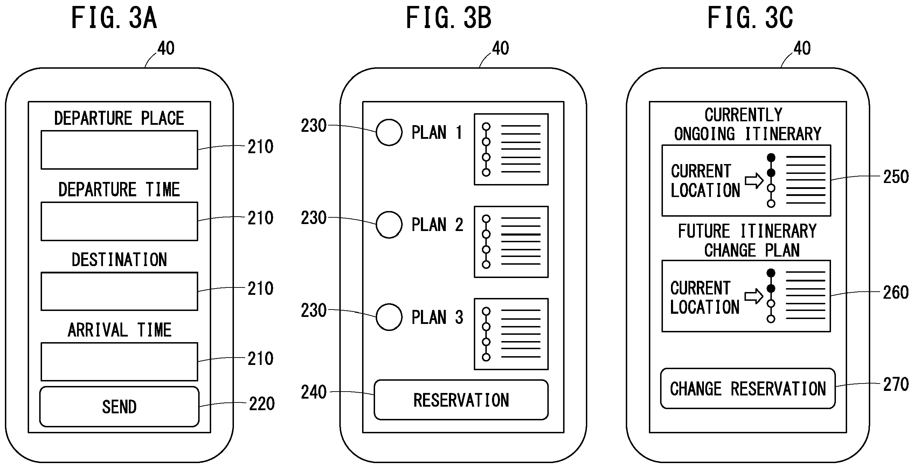

FIG. 3A, FIG. 3B, and FIG. 3C are diagrams showing screen display examples of the user terminal 40. These screens are displayed when application software is executed in the user terminal 40 such as a smartphone. The screen illustrated in FIG. 3A is displayed in order for the user to input itinerary creation conditions when requesting the itinerary server 30 to create an itinerary. The user operates the user terminal 40 to input a departure place, a departure time, a destination, and an arrival time as the itinerary creation conditions in input fields 210. After completing the input of the itinerary creation conditions, the user presses a send button 220 displayed on the screen. The itinerary creation conditions are transmitted from the user terminal 40 to the itinerary server 30 via the communication network 20.

FIG. 3B illustrates an example of a screen displayed as a result of the proposal unit 130 of the itinerary server 30 outputting a plurality of itinerary plans to the user terminal 40 in order to propose the itinerary plans to the user. This screen also serves as a reservation inquiry for proposing reservation of the plurality of types of moving bodies included in the itinerary proposed by the proposal unit 130. The user operates the user terminal 40 to select a radio button 230 corresponding to one of the plurality of itinerary plans displayed on the screen, thereby designating an itinerary. After designating the itinerary, the user presses a reservation button 240 displayed on the screen in order to request the itinerary server 30 to apply for reservation of the plurality of types of moving bodies included in the itinerary. The request for the reservation application for the moving bodies is transmitted from the user terminal 40 to the itinerary server 30 via the communication network 20.

FIG. 3C illustrates an example of a screen displayed as a result of the proposal unit 130 of the itinerary server 30 outputting a modified itinerary to the user terminal 40 in order to propose a change of a part of the itinerary to the user who is moving based on the originally designated itinerary. This screen also serves as a reservation change inquiry for proposing a change of the reservation of the moving body necessary for the change of a part of the itinerary. The user confirms, on the screen of the user terminal 40, content 250 in which the currently ongoing itinerary, the current location of the user, and a predicted arrival time at the destination are displayed, and content 260 in which the change plan for the future itinerary, the current location of the user, and a predicted arrival time at the destination are displayed. When requesting the itinerary server 30 to apply for a reservation change, the user presses a reservation change button 270 displayed on the screen. A request for an application for changing the reservation of the moving body is transmitted from the user terminal 40 to the itinerary server 30 via the communication network 20.

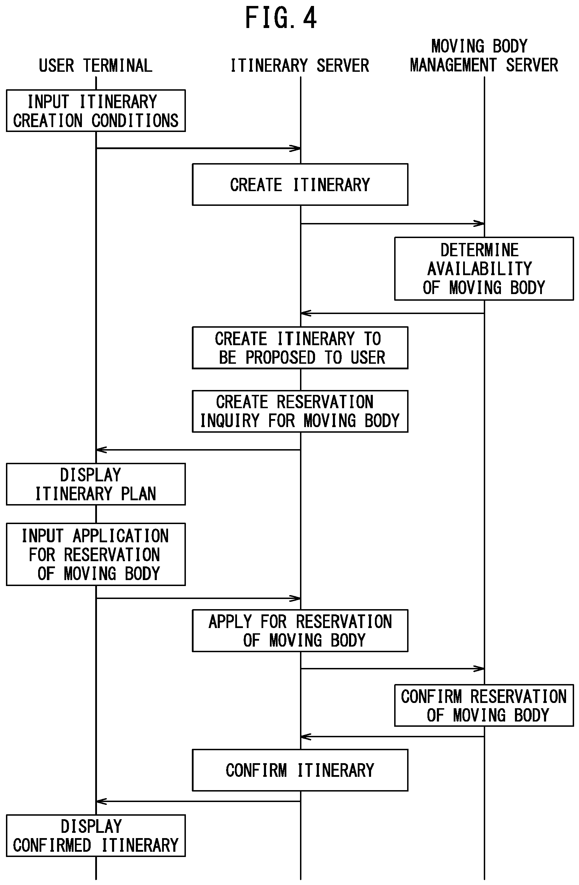

FIG. 4 is a diagram showing a sequence of creating an itinerary and reserving the moving body. In the user terminal 40, the user inputs itinerary creation conditions using the screen display shown in FIG. 3A, and an itinerary creation request is transmitted to the itinerary server 30. In the itinerary server 30, the creation unit 110 creates a plurality of itineraries based on the acquired itinerary creation conditions. The determination unit 120 inquires of the moving body management servers 60 respectively corresponding to a plurality of types of moving bodies based on the created itinerary, whether the moving bodies are available. For example, in a case where the plurality of types of moving bodies included in the itinerary are respectively provided by a plurality of providers of a ride sharing service, the determination unit 120 inquires of the moving body management servers 60 respectively operated by the plurality of providers about availability of each of the plurality of types of moving bodies.

The moving body management server 60 operated by each provider determines whether the moving body owned by each provider is available, and replies to the itinerary server 30.

The determination unit 120 of the itinerary server 30 acquires the response from the moving body management server 60, and determines an available moving body based on the acquired response. In a case where the moving body is an automobile, the moving body is available if allocation for use only by the user is possible. In a case where the moving body is a scheduled flight airplane, a train, or the like for transporting a large number of users, if there is an empty seat and a seat reservation is possible, the moving body is available. The creation unit 110 creates an itinerary to be proposed to the user by including, in an itinerary for which the moving body is determined to be available among the plurality of created itineraries, information about the available moving body. The proposal unit 130 creates a reservation inquiry for proposing reservation of the available moving body to the user, correspondingly to the itinerary to be proposed to the user. The proposal unit 130 outputs, to the user terminal 40, the itinerary created by the creation unit 110 and the reservation inquiry for the moving body to be proposed to the user.

In the user terminal 40, a plurality of itinerary plans are displayed using the screen display shown in FIG. 3B. One itinerary plan is designated and a reservation application for the moving body is input by the user, and a request for the reservation application is transmitted to the itinerary server 30.

Upon receiving the request for the reservation application for the moving body from the user terminal 40, the reservation unit 140 of the itinerary server 30 applies for the reservation of the moving body to the moving body management server 60.

The moving body management server 60 receives the reservation application for the moving body, and confirms the reservation of the moving body if the moving body is available. The moving body management server 60 notifies the itinerary server 30 that the reservation of the moving body has been confirmed.

Upon receiving the notification about confirmation of the reservation of the moving body from the moving body management server 60, the reservation unit 140 of the itinerary server 30 confirms the itinerary including the moving body for which the reservation has been confirmed, and outputs the confirmed itinerary to the user terminal 40.

The user terminal 40 displays the confirmed itinerary on the screen.

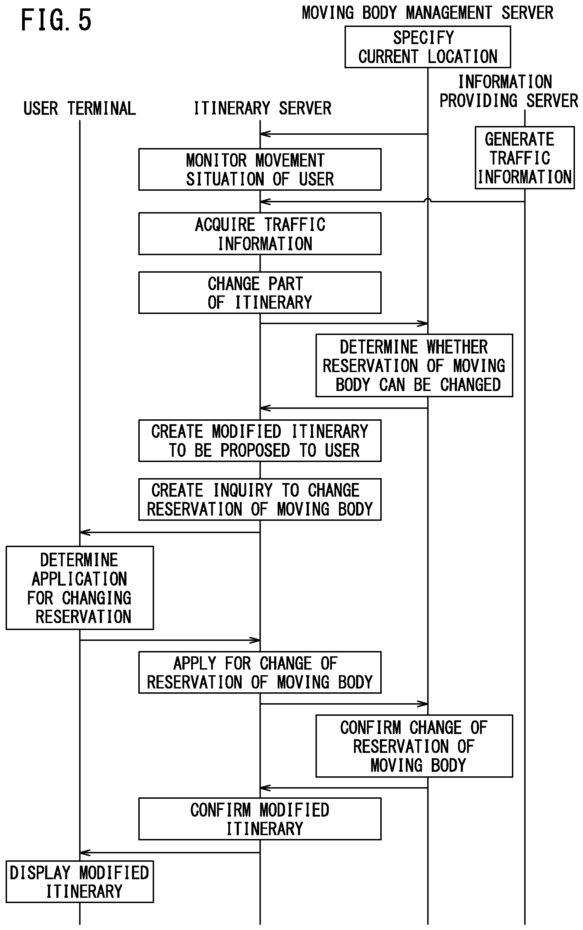

FIG. 5 is a diagram showing a sequence of a change of a part of the itinerary and a change of the reservation of the moving body. The moving body management server 60 specifies the current location of the user who moves using the moving body. The information about the current location of the user is obtained based on the position information of the moving body, the position information of the user terminal 40, procedure information obtained when the user starts or ends the use of the moving body, and the like. Examples of the procedure information include a completion notification by the driver of the moving body about receiving the start of a passenger transportation service, a completion notification about the check-in procedure at the check-in counter, and the like. When the user uses the moving body, the moving body management server 60 notifies the monitoring unit 150 of the itinerary server 30, of the specified current location of the user, in response to a request from the monitoring unit 150.

The monitoring unit 150 of the itinerary server 30 monitors the movement situation of the user based on the information about the current location of the user acquired from the moving body management server 60. The monitoring unit 150 may acquire the position information of the user terminal 40 from the information providing server 50 and monitor the movement situation of the user based on the position information. The monitoring unit 150 may acquire the position information of the moving body from another external server operated by the manufacturer of the moving body used by the user who is currently moving, and monitor the movement situation of the user based on the position information. The monitoring unit 150 specifies, as the movement situation of the user, the current location of the user and the moving body currently used by the user. The moving body currently used by the user is defined as a third moving body.

In response to a request from the monitoring unit 150 of the itinerary server 30, the information providing server 50 generates traffic information related to the movement of the user by the plurality of types of moving bodies included in the itinerary, and provides the traffic information to the monitoring unit 150. One of the moving bodies scheduled to be used later by this user is defined as the first moving body. The traffic information provided by the information providing server 50 to the monitoring unit 150 includes traffic information related to the movement of the user by the first moving body. The traffic information is, for example, traffic congestion information.

The monitoring unit 150 of the itinerary server 30 acquires, from the information providing server 50, traffic information related to the movement of the user by a plurality of types of moving bodies including the first moving body. When the moving body management server 60 can provide the traffic information to the monitoring unit 150, the monitoring unit 150 may acquire the traffic information from the moving body management server 60. Based on the acquired traffic information, the monitoring unit 150 determines whether the first moving body can arrive at an end point for which the first moving body is bound, by a predetermined time that is based on the itinerary. The end point for which the first moving body is bound is defined as a second point. The predetermined time may coincide with a scheduled arrival time of the first moving body at the second point determined in the itinerary, or may be later than the scheduled arrival time.

The creation unit 110 of the itinerary server 30 determines whether to change a part of the itinerary based on the movement situation of the user and the traffic information that are acquired by the monitoring unit 150. For example, in a case where the monitoring unit 150 specifies that the user is still moving by the third moving body and determines that the first moving body cannot arrive at the second point by the predetermined time, the creation unit 110 changes a part of the itinerary. For example, in a case where the user plans to use the second moving body after using the third moving body and before using the first moving body, a part of the itinerary that is related to the movement of the user by the second moving body is changed. However, in a case where the first moving body cannot arrive at the second point by the predetermined time even if a part of the itinerary is changed, the creation unit 110 may not change the part of the itinerary.

The determination unit 120 of the itinerary server 30 inquires of the moving body management servers 60 respectively corresponding to the first moving body and the second moving body whose reservation is to be changed, whether the reservation of the first moving body and the second moving body can be changed in accordance with the itinerary to be changed. In the changing of the reservation of the moving body, for example, a point at which the user transfers from the second moving body to the first moving body is changed from a first point to a fourth point.

Each moving body management server 60 determines whether the reservation of each of the first moving body and the second moving body can be changed, and replies to the itinerary server 30.

The determination unit 120 of the itinerary server 30 acquires the response from each moving body management server 60, and determines whether the reservation of each moving body can be changed based on the acquired response. The creation unit 110 creates an itinerary to be proposed to the user by including, in the modified itinerary, information related to the change of the reservation of the first moving body and the second moving body. The proposal unit 130 creates a reservation change inquiry for proposing a change of the reservation of the first moving body and the second moving body to the user, correspondingly to the modified itinerary to be proposed to the user. The proposal unit 130 outputs, to the user terminal 40, the modified itinerary created by the creation unit 110, and the reservation change inquiry for proposing the change of the reservation of the moving body to the user.

In the user terminal 40, the plan of the modified itinerary is displayed using the screen display shown in FIG. 3C, an application for changing the reservation of the moving body is determined by the user, and a request for the change application is transmitted to the itinerary servers 30.

Upon receiving the request for the change application for the reservation of the moving body from the user terminal 40, the reservation unit 140 of the itinerary server 30 applies for the change of the reservation of the moving body to the moving body management server 60.

The moving body management server 60 receives the change application for the reservation of the moving body, and if the change of the reservation is possible, the moving body management server 60 confirms the change of the reservation. The moving body management server 60 notifies the itinerary server 30 that the change of the reservation of the moving body has been confirmed.

Upon receiving the notification about the confirmation of the change of the reservation of the moving body from the moving body management server 60, the reservation unit 140 of the itinerary server 30 confirms the modified itinerary including the first moving body and the second moving body for which the change of the reservation has been confirmed, and outputs the confirmed modified itinerary to the user terminal 40.

The user terminal 40 displays the confirmed modified itinerary on the screen.

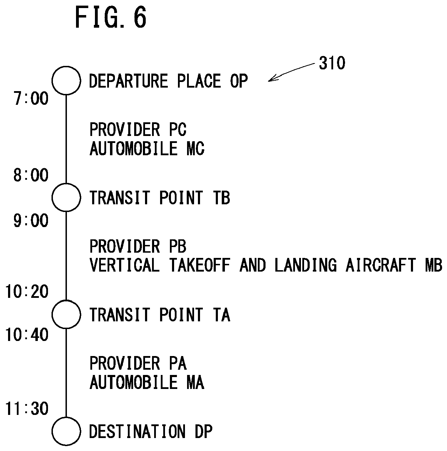

FIG. 6 is a diagram illustrating an itinerary 310 that has been created and confirmed. The itinerary 310 is created according to the sequence shown in FIG. 4. The itinerary 310 includes a movement route from a departure place OP to a destination DP, and a plurality of moving bodies that move along the movement route. In the example illustrated in FIG. 6, the plurality of types of moving bodies included in the itinerary 310 are an automobile MA, a vertical takeoff and landing (VTOL) aircraft MB, and an automobile MC provided by providers PA, PB, and PC, respectively. The automobile MA corresponds to the first moving body, the vertical takeoff and landing aircraft MB corresponds to the second moving body, and the automobile MC corresponds to the third moving body. That is, the type of the second moving body is air transportation means, and the type of the first moving body and the type of the third moving body are both land transportation means. However, the type of the first moving body, the type of the second moving body, and the type of the third moving body are not limited to the combination of the land transportation means and the air transportation means.

The user moves in a section from the departure place OP to a transit point TB by riding in the automobile MC provided by the provider PC. The automobile MC departs from the departure place OP at 7:00 and arrives at the transit point TB at 8:00. The user moves in a section from the transit point TB to a transit point TA by boarding on the vertical takeoff and landing aircraft MB provided by the provider PB. The vertical takeoff and landing aircraft MB departs from the transit point TB at 9:00 and arrives at the transit point TA at 10:20. The transit point TA corresponds to the first point. The user moves in a section from the transit point TA to the destination DP by riding in the automobile MA provided by the provider PA. The automobile MA departs from the transit point TA at 10:40 and arrives at the destination DP at 11:30. The destination DP corresponds to the second point.

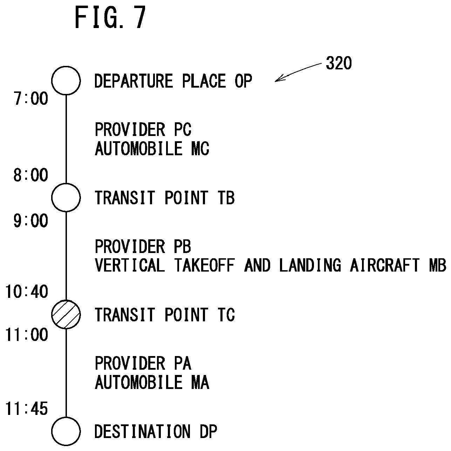

FIG. 7 is a diagram illustrating a modified itinerary 320. The modified itinerary 320 is obtained according to the sequence shown in FIG. 5. For example, it is assumed that, while the user is currently moving by the automobile MC from the departure place OP to the transit point TB based on the itinerary 310 illustrated in FIG. 6, traffic information for a section from the transit point TA to the destination DP over which the user is scheduled to move later by riding in the automobile MA is obtained. Suppose that, according to the traffic information, it is determined that the automobile MA cannot arrive at the destination DP by a predetermined time due to traffic congestion. The predetermined time is a time X minutes after the scheduled arrival time 11:30 of the automobile MA at the destination DP determined in the itinerary 310 illustrated in FIG. 6, and is a time that can be changed by setting. For example, when X = 30, the predetermined time is 12:00, which is 30 minutes after the scheduled arrival time 11:30. When the predicted arrival time of the automobile MA at the destination DP is estimated to be later than the predetermined time 12:00, the monitoring unit 150 determines that the automobile MA cannot arrive at the destination DP by the predetermined time.

The creation unit 110 changes a part of the itinerary by changing a point at which the user transfers from the vertical takeoff and landing aircraft MB to the automobile MA to be used later, from the transit point TA shown in FIG. 6 to a transit point TC shown in FIG. 7. The transit point TC corresponds to the above-described fourth point. It is more preferable that the transit point TC is a take-off and landing site of the aircraft by which the predicted arrival time at the destination DP is the earliest among take-off and landing sites that are positioned second closest to the destination DP after the transit point TA. In the modified itinerary 320 illustrated in FIG. 7, the vertical takeoff and landing aircraft MB is scheduled to arrive at the transit point TC at 10:40, and the predicted arrival time at the destination DP of the automobile MA scheduled to depart from the transit point TC at 11:00 is 11:45. Therefore, as a result of changing a part of the itinerary, the automobile MA is expected to arrive at the destination DP by the predetermined time 12:00.

When the change of the reservation of each of the automobile MA and the vertical takeoff and landing aircraft MB is confirmed, the modified itinerary 320 is confirmed.

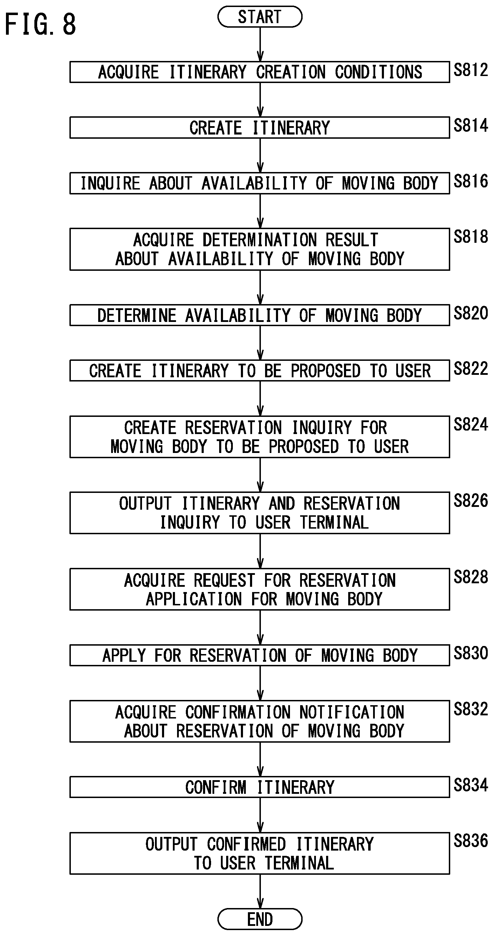

FIG. 8 is a flowchart showing a process of creating the itinerary 310 and a process of reserving the moving body, which are performed by the itinerary server 30. These processes are performed by, for example, the processing circuitry of the itinerary server 30 executing a program. When these processes are started, in step S812, the creation unit 110 acquires itinerary creation conditions. In step S814, the creation unit 110 creates an itinerary. In step S816, the determination unit 120 inquires of the moving body management servers 60 corresponding to the respective moving bodies, whether the plurality of types of moving bodies based on the itinerary are available. In step S818, the determination unit 120 acquires a determination result of the availability of the moving bodies from the moving body management servers 60. In step S820, the determination unit 120 determines availability of the plurality of types of moving bodies based on the responses from the moving body management servers 60.

In step S822, the creation unit 110 creates an itinerary to be proposed to the user. In step S824, the proposal unit 130 creates a reservation inquiry for a plurality of types of moving bodies to be proposed to the user. In step S826, the itinerary created in step S822 and the reservation inquiry for the plurality of types of moving bodies that is created in step S824 are output to the user terminal 40.

In step S828, the reservation unit 140 acquires, from the user terminal 40, a request for a reservation application for the plurality of types of moving bodies. In step S830, the reservation unit 140 applies for reservation of the plurality of types of moving bodies to the moving body management servers 60. In step S832, the reservation unit 140 acquires, from the moving body management servers 60, notifications about the confirmation of the reservation of the plurality of types of moving bodies. In step S834, the reservation unit 140 confirms the itinerary 310 including the moving bodies for which the reservation has been confirmed. In step S836, the reservation unit 140 outputs the confirmed itinerary 310 to the user terminal 40. When step S836 is completed, these processes end.

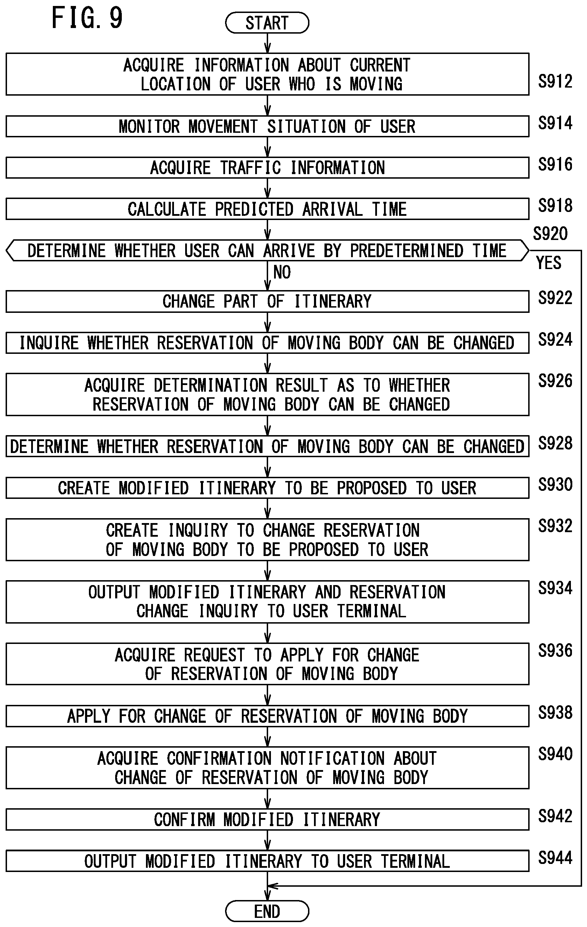

FIG. 9 is a flowchart showing a process of changing a part of the itinerary 310 and a process of changing the reservation of the moving body, which are performed by the itinerary server 30. These processes are performed by, for example, the processing circuitry of the itinerary server 30 executing a program. These processes are repeatedly executed, for example, periodically after the user starts moving based on the itinerary 310. When these processes are started, in step S912, the monitoring unit 150 acquires, from the moving body management server 60, information about the current location of the user who is moving based on the itinerary 310. In step S914, the monitoring unit 150 monitors the movement situation of the user based on the acquired information about the current location of the user. In step S916, the monitoring unit 150 acquires traffic information from the information providing server 50. In step S918, the monitoring unit 150 calculates a predicted time at which the user arrives at the destination, based on the acquired traffic information. In step S920, the monitoring unit 150 determines whether the user can arrive at the destination by a predetermined time. If the determination in step S920 is YES, these processes end. If the determination in step S920 is NO, the procedure proceeds to step S922.

In step S922, the creation unit 110 changes a part of the itinerary. In step S924, the determination unit 120 inquires of the moving body management server 60 whether the reservation of the moving body can be changed, correspondingly to the itinerary to be changed. In step S926, the determination unit 120 acquires, from the moving body management server 60, a determination result as to whether the reservation of the moving body can be changed. In step S928, the determination unit 120 determines whether the reservation of the moving body can be changed. In step S930, the creation unit 110 creates a modified itinerary to be proposed to the user. In step S932, the proposal unit 130 creates an inquiry to change the reservation of the moving body to be proposed to the user. In step S934, the proposal unit 130 outputs the modified itinerary and the inquiry to change the reservation of the moving body to the user terminal 40.

In step S936, the reservation unit 140 acquires a request to apply for a change of the reservation of the moving body from the user terminal 40. In step S938, the reservation unit 140 applies for the change of the reservation of the moving body to the moving body management server 60. In step S940, the reservation unit 140 acquires, from the moving body management server 60, a notification about the confirmation of the change of the reservation of the moving body. In step S942, the reservation unit 140 confirms the modified itinerary 320 for which the change of the reservation of the moving body has been confirmed. In step S944, the reservation unit 140 outputs the confirmed modified itinerary 320 to the user terminal 40. When step S944 is completed, the present processes end.

### [Modifications]

The above-described embodiment may be modified as follows.

### (Modification 1)

In the above-described embodiment, when changing the itinerary 310 to the itinerary 320, the transit point TA at the first point, which is the end point of the movement by the vertical takeoff and landing aircraft MB that is the second moving body, is changed to the transit point TC that is the fourth point. Further, the starting point of the movement by the vertical takeoff and landing aircraft MB may also be changed.

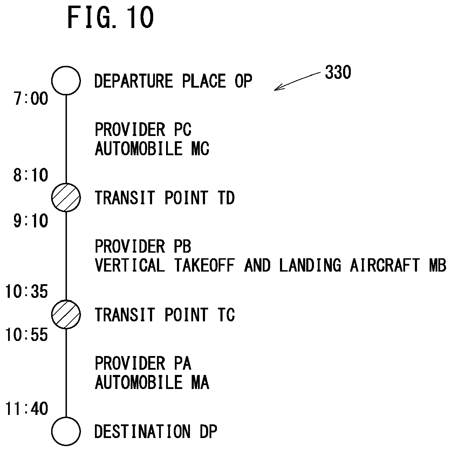

FIG. 10 is a diagram illustrating an itinerary 330 modified by a multimodal transportation system 10 according to the first modification. The modified itinerary 330 is also obtained according to the sequence shown in FIG. 5, similarly to the itinerary 320 described above. In the present modification, when the end point of the movement by the second moving body is changed from the first point to the fourth point, the starting point of the movement by the vertical takeoff and landing aircraft MB is changed from the third point to a sixth point. Accordingly, the end point of the movement by the third moving body that has departed from the fifth point is changed from the third point to the sixth point. In the modified itinerary 330, the end point of the movement by the vertical takeoff and landing aircraft MB is changed from the transit point TA shown in FIG. 6 to the transit point TC shown in FIG. 10, and the starting point of the movement by the vertical takeoff and landing aircraft MB is changed from the transit point TB shown in FIG. 6 to a transit point TD shown in FIG. 10. In addition, the end point of the movement by the automobile MC that has departed from the departure place OP is changed from the transit point TB shown in FIG. 6 to the transit point TD shown in FIG. 10.

In the modified itinerary 330 illustrated in FIG. 10, the automobile MC that has departed from the departure place OP at 7:00 is scheduled to arrive at the transit point TD at 8:10, and the vertical takeoff and landing aircraft MB scheduled to depart from the transit point TD at 9:10 is scheduled to arrive at the transit point TC at 10:35. The predicted arrival time at the destination DP of the automobile MA scheduled to depart from the transit point TC at 10:55 is 11:40. Therefore, as a result of changing a part of the itinerary, the automobile MA is expected to arrive at the destination DP by the predetermined time 12:00.

### (Modification 2)

In the above-described embodiment, the modified itinerary 320 is output to the user terminal 40. However, instead of the user terminal 40, the itinerary 320 may be output to a terminal mounted on the third moving body.

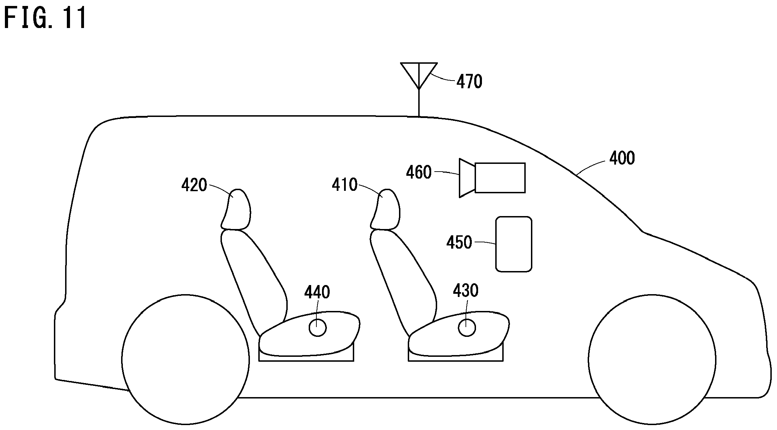

FIG. 11 is a diagram showing an example in which a sensor for identifying a seating position of a user is mounted on a moving body 400 in a multimodal transportation system according to the second modification. The moving body 400 includes a front row seat 410 and a rear row seat 420. The front row seat 410 and the rear row seat 420 include seating sensors 430 and 440, respectively, for detecting whether an occupant is seated. The moving body 400 further includes an in-vehicle device 450, a camera 460, and a wireless communication device 470. The in-vehicle device 450 includes a touch panel, a speaker, and a microphone. The touch panel and the camera 460 of the in-vehicle device 450 are attached to the front part of the interior of the moving body 400. The display surface of the touch panel of the in-vehicle device 450 and the lens of the camera 460 are directed toward the interior.

In the present modification, the moving body 400 illustrated in FIG. 11 is the third moving body used by the user who has started moving based on the itinerary 310. When the user is seated on the front row seat 410, a sensor signal is transmitted from the seating sensor 430 to the itinerary server 30 via the wireless communication device 470. When the user is seated on the rear row seat 420, a sensor signal is transmitted from the seating sensor 440 to the itinerary server 30 via the wireless communication device 470. The identification unit 160 of the itinerary server 30 illustrated in FIG. 2 acquires information for identifying the seating position of the user in the moving body 400 based on the sensor signal from the seating sensor 430 or 440.

Instead of the seating sensor 430 or 440, the camera 460 may be used as a sensor for identifying the seating position of the user. The front row seat 410 and the rear row seat 420 of the moving body 400, and the user seated on the front row seat 410 or the rear row seat 420, are included in the in-vehicle video captured by the camera 460. The in-vehicle video is transmitted to the itinerary server 30 via the wireless communication device 470. The identification unit 160 acquires information for identifying the seating position of the user in the moving body 400 based on the in-vehicle video transmitted from the camera 460.

When the identification unit 160 identifies that the seating position of the user is the front row seat 410, the modified itinerary 320 is displayed on the touch panel of the in-vehicle device 450 attached to the front part of the interior of the moving body 400, instead of the user terminal 40. When the identification unit 160 identifies that the seating position of the user is the rear row seat 420, the modified itinerary 320 is displayed on the user terminal 40.

In a case where the third moving body, which is the moving body 400, is the automobile MC provided by the provider PC of the ride sharing service described above, it is considered that the seating position of the user is the rear row seat 420 in many cases, and therefore, the modified itinerary 320 is displayed on the user terminal 40. In a case where the third moving body, which is the moving body 400, is a moving body whose operation is managed by a business operator and a touch panel of the in-vehicle device 450 is attached to each seat on which a passenger is seated, the modified itinerary 320 is displayed on the touch panel. However, the business operator in this case is not a provider of the ride sharing service. When the touch panel of the in-vehicle device 450 is not attached to each seat on which a passenger is seated, the modified itinerary 320 is displayed on the user terminal 40. When the modified itinerary 320 is displayed on the touch panel of the in-vehicle device 450 or the user terminal 40, voice guidance and voice input using the speaker and the microphone may be used.

In a case where the third moving body, which is the moving body 400, is an automobile owned by the user or an automobile lent to the user from another person, the seating position of the user may be identified as the front row seat 410. In a case where it is identified that the user does not drive the moving body 400 themselves because the seating position is not the driver's seat or the moving body 400 is in automated driving mode, the modified itinerary 320 is displayed on the touch panel on the front side of the interior of the moving body 400. In this case, voice guidance and voice input using the speaker and the microphone may be used. When it is identified that the seating position of the user is the driver's seat that is the front row seat 410 and the user drives the moving body 400 themselves, the modified itinerary 320 is displayed on the touch panel on the front side of the interior of the moving body 400, and at the same time, voice guidance and voice input using the speaker and the microphone are used. Alternatively, voice guidance and voice input related to the modified itinerary 320 may be performed on the user terminal 40 using the speaker and the microphone.

### (Modification 3)

In the above-described embodiment and modifications, the point at which the user transfers from the second moving body to the first moving body is changed from the first point to the fourth point. That is, the end point of the movement by the second moving body is changed from the first point to the fourth point. However, in a case where the second moving body is provided by a provider of the ride sharing service, there is a possibility that a fellow passenger other than the user uses the second moving body. Therefore, the arrival point of the second moving body may be changed from the first point to the fourth point only when such a fellow passenger is not present.

Even in a case where a fellow passenger is present, it may be determined whether changing the arrival point is advantageous for the fellow passenger such as the predicted arrival time of the fellow passenger at the final destination being earlier than the scheduled arrival time in a case where the arrival point of the second moving body is not changed. Whether changing the arrival point is advantageous for the fellow passenger is determined by the moving body management server 60 of the provider that provides the second moving body. When it is determined that changing the arrival point is advantageous also for the fellow passenger and the fellow passenger's agreement is obtained, the arrival point of the second moving body is changed from the first point to the fourth point.

### (Modification 4)

In the first modification described above, the point at which the user transfers from the third moving body to the second moving body is changed from the third point to the sixth point. That is, the end point of the movement by the third moving body is changed from the third point to the sixth point. The sixth point is also a changed starting point of the movement by the second moving body. When the second moving body is a vertical takeoff and landing aircraft MB, the sixth point is a takeoff and landing site of the aircraft. When the third moving body is an automobile owned by the user, a space for parking the automobile until the user who transfers from the third moving body to the second moving body goes back is required at the sixth point. Therefore, when the reservation unit 140 of the itinerary server 30 applies to the moving body management server 60 for the change of the reservation of the moving body, the reservation unit 140 may apply for reservation of a space for parking the automobile of the user at the sixth location to a predetermined server that manages a parking lot.

### (Modification 5)

In the above-described embodiment and modifications, when the movement of the user by the second moving body included in the itinerary 310 is changed, at least the end point of the movement by the vertical takeoff and landing aircraft MB provided by the provider PB of the ride sharing service is changed. However, the movement by the vertical takeoff and landing aircraft MB may be changed to movement by a train or a bus whose operation is managed by a railway company or a bus company.

### (Modification 6)

The above-described embodiment and modifications may be combined as appropriate.

### [Invention Obtained from Embodiment]

The invention that can be grasped from the above-described embodiment and modifications will be described below.
(1) The multimodal transportation system (10), which provides the user with a service for moving from the departure place (OP) to the destination (DP) using the plurality of types of moving bodies, includes the creation unit (110) configured to create, based on the departure place and the destination, the itinerary (310) including the movement route from the departure place to the destination, and the plurality of types of moving bodies configured to move along the movement route; the determination unit (120) configured to determine whether the plurality of types of moving bodies based on the itinerary are available; the proposal unit (130) configured to output, to the external terminal (40), the itinerary including the plurality of types of moving bodies determined to be available, in order to propose the itinerary to the user; and the monitoring unit (150) configured to monitor the movement situation of the user who moves based on the itinerary, and acquire the traffic information related to the movement of the user by the plurality of types of moving bodies. Based on the movement situation of the user that is based on the itinerary designated by the user and the traffic information that is related to the movement of the user by the first moving body (MA) among the plurality of types of moving bodies, the creation unit changes a part of the itinerary that is related to the movement of the user by the second moving body (MB) among the plurality of types of moving bodies, the second moving body being scheduled to be used by the user before the first moving body, and in order to propose the change of the part of the itinerary to the user, the proposal unit outputs the itinerary (320) that has been modified to include the change to the external terminal. This increases the possibility of avoiding a situation in which the movement of the user by the first moving body subsequent to the movement by the second moving body does not proceed according to the itinerary.
(2) The itinerary includes movement of the user from the first point (TA) to the second point (DP) on the movement route using the first moving body, and movement of the user from the third point (TB) to the first point on the movement route using the second moving body; based on the traffic information that is related to the movement of the user by the first moving body, the monitoring unit determines whether it is possible for the first moving body to arrive at the second point by the predetermined time that is based on the itinerary; and when the monitoring unit determines that it is not possible for the first moving body to arrive at the second point by the predetermined time, the creation unit changes the first point to the fourth point (TC) that is different from the first point, thereby changing a part of the itinerary that is related to the movement of the user by the first moving body and the second moving body. This increases the possibility of avoiding a situation in which the movement of the user by the first moving body subsequent to the movement by the second moving body does not proceed according to the itinerary, without affecting the movement of the user before the second moving body.
(3) The itinerary further includes movement of the user from the fifth point (OP) to the third point on the movement route using the third moving body (MC) among the plurality of types of moving bodies, and when the monitoring unit determines that it is not possible for the first moving body to arrive at the second point by the predetermined time while the user is moving using the third moving body, the creation unit changes the first point to the fourth point and changes the third point to the sixth point (TD) that is different from the third point, thereby changing a part of the itinerary that is related to the movement of the user by the first moving body, the second moving body, and the third moving body. In a case where the third moving body is an automobile owned and driven by the user, it is relatively easy to change the point for which the third moving body is bound, from the third point to the sixth point. As a result, the possibility of avoiding a situation in which the movement of the user by the first moving body subsequent to the movement by the second moving body does not proceed according to the itinerary is further increased.
(4) The type of the second moving body is air transportation means, and the type of the first moving body is transportation means that is different from the air transportation means. This increases the possibility of avoiding a situation in which the movement of the user by the first moving body subsequent to the movement by the second moving body does not proceed according to the itinerary including the air transportation means.
(5) The multimodal transportation system further includes the identification unit (160) configured to acquire the information for identifying the seating position (410, 420) of the user who moves based on the itinerary, and the proposal unit determines the external terminal (40, 450) according to the seating position and outputs the itinerary (320, 330) that has been modified to the determined external terminal. Accordingly, convenience when the user visually recognizes the modified itinerary is increased.
(6) The proposal unit outputs, to the external terminal, the itinerary and the reservation inquiry for proposing reservation of the plurality of types of moving bodies, and when the part of the itinerary is changed, the proposal unit outputs, to the external terminal, the itinerary that has been modified to include the change, and the reservation change inquiry for proposing a change of the reservation. As a result, a flexible and quick itinerary modification can be provided to the user who has started moving based on the itinerary.
(7) The multimodal transportation method for providing the user with a service for moving from the departure place to the destination using a plurality of types of moving bodies includes: creating, based on the departure place and the destination, the itinerary including the movement route from the departure place to the destination, and the plurality of types of moving bodies configured to move along the movement route; determining whether the plurality of types of moving bodies based on the itinerary are available; outputting, to the external terminal, the itinerary including the plurality of types of moving bodies determined to be available, in order to propose the itinerary to the user; monitoring the movement situation of the user who moves based on the itinerary and acquiring the traffic information that is related to the movement of the user by the plurality of types of moving bodies; based on the movement situation of the user that is based on the itinerary designated by the user and the traffic information that is related to the movement of the user by the first moving body among the plurality of types of moving bodies, changing a part of the itinerary that is related to the movement of the user by the second moving body among the plurality of types of moving bodies, the second moving body being scheduled to be used by the user before the first moving body; and in order to propose the change of the part of the itinerary to the user, outputting the itinerary that has been modified to include the change to the external terminal. This increases the possibility of avoiding a situation in which the movement of the user by the first moving body subsequent to the movement by the second moving body does not proceed according to the itinerary.
(8) The program of the present invention is a program for causing the processor to execute the above-described multimodal transportation method. This makes it possible to easily change a part of the itinerary.

A multimodal transportation system (10) includes a creation unit (110) that creates an itinerary (310) including a movement route and a plurality of types of moving bodies moving along the movement route, and a proposal unit (130) that outputs the itinerary to an external terminal (40). Based on the movement situation of the user and traffic information related to the movement by a first moving body (MA), the creation unit changes a part of the itinerary that is related to the movement by a second moving body (MB) scheduled to be used by the user before the first moving body, and the proposal unit outputs the itinerary that has been modified to the external terminal.

## Claims

1. A multimodal transportation system (10) that provides a user with a service for moving from a departure place (OP) to a destination (DP) using a plurality of types of moving bodies, the multimodal transportation system comprising:
a creation unit (110) configured to create, based on the departure place and the destination, an itinerary (310, 320, 330) including a movement route from the departure place to the destination, and the plurality of types of moving bodies configured to move along the movement route;
a determination unit (120) configured to determine whether the plurality of types of moving bodies based on the itinerary are available;
a proposal unit (130) configured to output, to an external terminal (40, 450), the itinerary including the plurality of types of moving bodies determined to be available, in order to propose the itinerary to the user; and
a monitoring unit (150) configured to monitor a movement situation of the user who moves based on the itinerary, and acquire traffic information related to movement of the user by the plurality of types of moving bodies, wherein
based on the movement situation of the user that is based on the itinerary designated by the user and the traffic information that is related to the movement of the user by a first moving body (MA) among the plurality of types of moving bodies, the creation unit changes a part of the itinerary that is related to the movement of the user by a second moving body (MB) among the plurality of types of moving bodies, the second moving body being scheduled to be used by the user before the first moving body, and
in order to propose a change of the part of the itinerary to the user, the proposal unit outputs the itinerary (320) that has been modified to include the change to the external terminal.

2. The multimodal transportation system according to claim 1, wherein
the itinerary includes movement of the user from a first point (TA) to a second point (DP) on the movement route using the first moving body, and movement of the user from a third point (TB) to the first point on the movement route using the second moving body,
based on the traffic information that is related to the movement of the user by the first moving body, the monitoring unit determines whether it is possible for the first moving body to arrive at the second point by a predetermined time that is based on the itinerary, and
when the monitoring unit determines that it is not possible for the first moving body to arrive at the second point by the predetermined time, the creation unit changes the first point to a fourth point (TC) that is different from the first point, thereby changing a part of the itinerary that is related to the movement of the user by the first moving body and the second moving body.

3. The multimodal transportation system according to claim 2, wherein
the itinerary further includes movement of the user from a fifth point (OP) to the third point on the movement route using a third moving body (MC) among the plurality of types of moving bodies, and
when the monitoring unit determines that it is not possible for the first moving body to arrive at the second point by the predetermined time while the user is moving using the third moving body, the creation unit changes the first point to the fourth point and changes the third point to a sixth point (TD) that is different from the third point, thereby changing a part of the itinerary that is related to the movement of the user by the first moving body, the second moving body, and the third moving body.

4. The multimodal transportation system according to claim 2 or 3, wherein
a type of the second moving body is air transportation means, and a type of the first moving body is transportation means different from the air transportation means.

5. The multimodal transportation system according to any one of claims 1 to 4, further comprising
a reservation unit (140) configured to, when the user designates the itinerary, apply to an external server (60) for reservation of at least one type of moving body among the plurality of types of moving bodies included in the designated itinerary, wherein
upon receiving a notification about confirmation of the reservation from the external server, the reservation unit confirms the itinerary and outputs the confirmed itinerary to the external terminal.

6. The multimodal transportation system according to any one of claims 1 to 5, further comprising
an identification unit (160) configured to acquire information for identifying a seating position (410, 420) of the user who moves based on the itinerary, wherein
the proposal unit determines the external terminal according to the seating position, and outputs the itinerary (320, 330) that has been modified to the determined external terminal.

7. The multimodal transportation system according to any one of claims 1 to 6, wherein
the proposal unit outputs, to the external terminal, the itinerary and a reservation inquiry for proposing reservation of the plurality of types of moving bodies, and
when the part of the itinerary is changed, the proposal unit outputs, to the external terminal, the itinerary that has been modified to include the change, and a reservation change inquiry for proposing a change of the reservation.

8. A multimodal transportation method for providing a user with a service for moving from a departure place to a destination using a plurality of types of moving bodies, the multimodal transportation method comprising the steps of:
creating, based on the departure place and the destination, an itinerary including a movement route from the departure place to the destination, and the plurality of types of moving bodies configured to move along the movement route;
determining whether the plurality of types of moving bodies based on the itinerary are available;
outputting, to an external terminal, the itinerary including the plurality of types of moving bodies determined to be available, in order to propose the itinerary to the user;
monitoring a movement situation of the user who moves based on the itinerary and acquiring traffic information that is related to movement of the user by the plurality of types of moving bodies;
based on the movement situation of the user that is based on the itinerary designated by the user and the traffic information that is related to the movement of the user by a first moving body among the plurality of types of moving bodies, changing a part of the itinerary that is related to the movement of the user by a second moving body among the plurality of types of moving bodies, the second moving body being scheduled to be used by the user before the first moving body; and
in order to propose a change of the part of the itinerary to the user, outputting the itinerary that has been modified to include the change to the external terminal.

9. A program comprising instructions for causing a processor to execute the multimodal transportation method according to claim 8.
